# EUROPÄISCHE PATENTSCHRIFT

(11) **EP 0 562 485 B1**
(45) Veröffentlichungstag und Bekanntmachung des Hinweises auf die Patenterteilung: **31.05.1995**
(21) Anmeldenummer: 93104539.7
(22) Anmeldetag: 19.03.1993
(51) Int. Cl.: B62B 3/06

(54) **Deichselgelenktes Flurförderzeug**
Hand-guided fork lift truck
Chariot de manutention guidé par timon

(30) Priorität: 26.03.1992 DE 4209864
(43) Veröffentlichungstag der Anmeldung: 29.09.1993
(73) Patentinhaber: Linde Aktiengesellschaft, 65189 Wiesbaden (DE)
(72) Erfinder: Cartier, Guy, F-86200 Loudun (FR); Briday, Yves, F-86130 Jaunay Clan (FR)
(74) Vertreter: Schaefer, Gerhard, Dr.

(56) Entgegenhaltungen:
- DE-A- 3 522 866
- FR-A- 2 406 602
- FR-A- 2 499 536
- US-A- 4 290 660

## Beschreibung

Die Erfindung betrifft ein deichselgelenktes Flurförderzeug mit einer Abschlußwand, die das Flurförderzeug frontseitig begrenzt, wobei das Flurförderzeug zumindest zum zeitweisen Betrieb durch eine vor der Abschlußwand gehende, das Flurförderzeug nachführende Bedienperson geeignet ist. Derartige Flurförderzeuge sind beispielsweise als Niederhubwagen, Kommissionierer und Hochhubwagen bekannt. Der Antrieb sowohl für den Hubmechanismus als auch für den Horizontaltransport erfolgt in der Regel elektrisch. Die Bedienperson bewegt sich beim Rangieren des Flurförderzeugs und beim Horizontaltransport im Bereich von dessen Frontseite. Im Gegensatz zu Gabelstaplern, bei denen der Bereich der Lastaufnahmemittel die Frontseite darstellt, wird bei den gattungsgemäßen Flurförderzeugen der deichselseitige, den Lastaufnahmemitteln ferne Bereich als Frontseite bezeichnet. Wenn die Bedienperson das Flurförderzeug beim Horizantaltransport hinter sich herführt, was in dieser Betriebsart die übliche Handhabung ist, kann es bei den gattungsgemäßen Flurförderzeugen des Standes der Technik vorkommen, daß die Ferse des zum Flurförderzeug nahen Beines der Bedienperson zwischen der Unterkante der frontseitigen Abschlußwand und der Fahrbahn eingeklemmt wird. Dies kann zu schwerwiegenden Verletzungen, z.B. zum Durchtrennen der Achillessehne, führen. Man hat deshalb schon Flurförderzeuge mit einer im bodennahen Bereich der Abschlußwand befestigten Gummi- oder Kunststoffschürze versehen, die bis zur Fahrbahn reicht und den Spalt zwischen der Abschlußwand und der Fahrbahn ausfüllt. Zur Befestigung der Schürze sind Bohrungen in die Abschlußwand eingebracht und Nietbefestigungen vorgesehen, was einen nicht unerheblichen Herstellungsaufwand bedingt.

Der vorliegenden Erfindung liegt die Aufgabe zugrunde, ein Flurförderzeug der eingangs genannten Art zur Verfügung zu stellen, das mit geringem Aufwand einen sicheren Horizontaltransport ermöglicht.

Diese Aufgabe wird erfindungsgemäß dadurch gelöst, daß die Abschlußwand in senkrechter Richtung im bodennahen Bereich derart konvex gekrümmt ist, daß beim Betrieb des Flurförderzeugs das Einklemmen einer Ferse der Bedienperson zwischen der Unterkante der Abschlußwand und der Fahrbahn verhindert ist. Falls das Flurförderzeug in dieser Betriebsart mit dem Bein der Bedienperson Kontakt bekommt so ist durch die Form der Krümmung ein Auffahren des Flurförderzeugs auf die Ferse verhindert. Der Kontakt erfolgt im Bereich der Wadenmuskulatur.

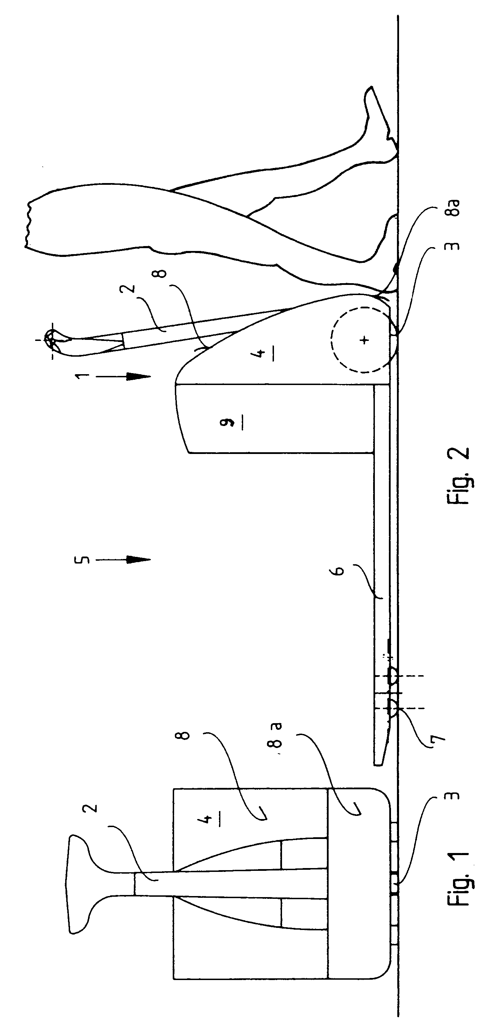

Weitere Vorteile und Einzelheiten der Erfindung werden anhand des in den Figuren schematisch dargestellten Ausführungsbeispiels näher erläutert. Dabei zeigt:
- Figur 1: eine Ansicht der Frontseite eines erfindungsgemäßen Flurförderzeugs;
- Figur 2: eine Seitenansicht des Flurförderzeugs nach Figur 1;
Das erfindungsgemäße Flurförderzeug ist in diesem Ausführungsbeispiel als Elektro-Deichsel-Hubwagen ausgebildet und weist ein Antriebsteil 1 mit Deichsel 2, Antriebsrad 3 und einem das Antriebsrad beeinhaltenden Gehäuse 4 auf. Mit dem Antriebsteil 1 verbunden ist auf in den Figuren nicht dargestellte Weise der Lastteil 5, der zwei Gabeln 6 mit daran befestigten Tandem-Lastrollen 7 aufweist. Unmittelbar benachbart dem Antriebsteil 1 ist eine Batterieaufnahmevorrrichtung 9 auf dem Lastteil 5 angeordnet. Das Gehäuse 4 ist zur Frontseite des Flurförderzeugs hin (d.h. nach rechts hin in Figur 2) durch eine Abschlußwand 8 begrenzt. Beim Horizontaltransport wird das Flurförderzeug elektrisch betrieben. Zu diesem Zweck betätigt die Bedienperson einen am Deichselhaltegriff angeordneten Schalter und läuft vor dem Flurförderzeug her. Für den Fall, daß kein elektrischer Fahrantrieb vorgesehen ist, muß die Bedienperson das Flurförderzeug ziehen.

Erfindungsgemäß ist die Abschlußwand 8 im bodennahen Bereich 8a konvex gekrümmt. Die Krümmung ist dabei so gestaltet, daß die Bedienperson, wenn sie vor dem Elektro-Deichsel-Hubwagen hergeht und diesen hinter sich herführt, nicht Gefahr läuft, die Ferse zwischen der Unterkante der Abschlußwand 8 und der Fahrbahn einzuklemmen.

## Patentansprüche

1. Deichselgelenktes Flurförderzeug mit einer Abschlußwand (8), die das Flurförderzeug frontseitig begrenzt, wobei das Flurförderzeug zumindest zum zeitweisen Betrieb durch eine vor der Abschlußwand gehende, das Flurförderzeug nachführende Bedienperson geeignet ist, **dadurch gekennzeichnet**, daß die Abschlußwand (8) in senkrechter Richtung im bodennahen Bereich (8a) derart konvex gekrümmt ist, daß beim Betrieb des Flurförderzeugs das Einklemmen einer Ferse der Bedienperson zwischen der Unterkante der Abschlußwand (8) und der Fahrbahn verhindert ist.

## Claims

1. Tiller-guided industrial truck with an end wall (8) which bounds the industrial truck at the front, the industrial truck being suitable at least for occasional operation by an operator leading the industrial truck and walking in front of the end wall, characterised in that in the vertical direction in the area (8a) near the ground the end wall (8) is curved convexly so as to prevent the trapping of a heel of the operator between the lower edge of the end wall (8) and the road surface when the industrial truck is in operation.

## Revendications

1. Chariot transporteur guidé par un conducteur accompagnateur, comprenant une cloison de fermeture (8) qui délimite le chariot sur sa face frontale, le chariot convenant au moins pour fonctionner de temps à autre en suivant le conducteur qui marche devant la cloison de fermeture, caractérisé en ce que la cloison de fermeture (8) est courbée de manière convexe dans la direction verticale, dans la zone (8a) proche du sol, de façon que lorsque le chariot est utilisé, on évite que le talon du conducteur risque de se coincer entre le bord inférieur de la cloison de fermeture (8) et la surface de roulement.
